# EUROPEAN PATENT APPLICATION

(11) **EP 1 094 223 A2**
(43) Date of publication of application: **25.04.2001**
(21) Application number: 00203628.3
(22) Date of filing: 19.10.2000
(51) Int. Cl.: F04D 25/06

(54) **Integrated engine cooling fan module**

(30) Priority: 20.10.1999 US 160604 P; 18.04.2000 US 551819
(71) Applicant: SIEMENS CANADA LIMITED, Mississauga, Ontario L5N 7A6 (CA)
(72) Inventor: Rahbar, Mehran K., London, Ontario N6H 5B8 (CA); Horski, Marek, London, Ontario N6E 1R6 (CA); Kershaw, Peter, London, Ontario N6K 4M2 (CA)
(74) Representative: Neill, Andrew Peter

(57) **Abstract**

An engine cooling module 10 includes a shroud structure 12 having a base 18. An electric motor 20 is provided for producing rotary motion. The motor includes a shaft structure having a shaft 22 coupled to a shaft support 25, a brush card assembly having a brush card 30 and brushes 32, a flux ring assembly having a flux ring 46 and magnets 50 coupled to the flux ring. The shaft support 25, the brush card 30, and the flux ring 46 are fixed to the base 18 so that the shroud structure defines a cover for one end of the motor 20. The motor further includes a core assembly 35 mounted for rotation about the shaft 22 and a commutator 27 operatively associated with the core assembly and the brushes. A fan 16 is coupled to the core assembly so as to be rotated thereby.

## Description

This application claims the benefit of U.S. Provisional Application 60/160,604, filed October 20, 1999 and No. 60/164,237 filed November 8, 1999, which are hereby incorporated by reference in their entirety herein.

This invention relates engine cooling modules for automotive applications and more particularly to a cooling module having fewer parts and short overall axial length.

Typical cooling modules for vehicle engines generally include three separate parts: a fan, an electric motor to drive the fan, and a shroud to direct air flow and to mount the module. An example of such a module is shown in U.S. Patent No. 4,548,548 to Gray, III. The structure disclosed in the Gray, III patent includes a motor that is not easily integrated with the fan and shroud, which results in a module having a significant overall axial length.

In certain applications, due to space and environmental constraints, it is desirable to provide an engine cooling module of reduced axial length and, to reduce costs, having reduced number of module parts.

Accordingly, there is a need to provide an improved cooling module for an electronically controlled engine which has a motor integrated with a fan and a shroud to provide a module having a reduced axial length and fewer parts.

An object of the present invention is to fulfill the need referred to above. In accordance with the principles of the present invention, this objective is obtained by providing an engine cooling module including a shroud structure having a base. An electric motor is provided for producing rotary motion. The motor includes a shaft structure having a shaft coupled to a shaft support, a brush card assembly having a brush card and brushes, a flux ring assembly having a flux ring and magnets coupled to the flux ring. The shaft support, the brush card, and the flux ring are fixed to the base so that the shroud structure defines a cover for one end of the motor. The motor further includes a core assembly mounted for rotation about the shaft and a commutator operatively associated with the core assembly and the brushes. A fan is coupled to the core assembly so as to be rotated thereby.

In accordance with another aspect of the invention, a method of assembling an engine cooling module provides a shroud structure having a base. A motor is provided which has a shaft support and a shaft coupled thereto, a brush card assembly having a brush card and brushes, a flux ring assembly having a flux ring and magnets coupled to the flux ring, a core assembly mounted for rotation about the shaft, and a commutator operatively associated with the core assembly and the brushes. The method includes fixedly coupling the shaft support, the brush card, and the flux ring to the base so that the base defines a cover for one end of the motor. The commutator and the core assembly is mounted on the shaft for rotation thereabout with the magnets being associated with the core assembly. A fan is coupled to the core assembly for rotation therewith.

Other objects, features and characteristics of the present invention, as well as the methods of operation and the functions of the related elements of the structure, the combination of parts and economics of manufacture will become more apparent upon consideration of the following detailed description and appended claims with reference to the accompanying drawings, all of which form a part of this specification.
FIG. 1 is a cross-sectional view of an engine cooling module provided in accordance with the principles of the present invention; and
FIG. 2 is a cross-sectional view of a second embodiment of an engine cooling module of the invention.

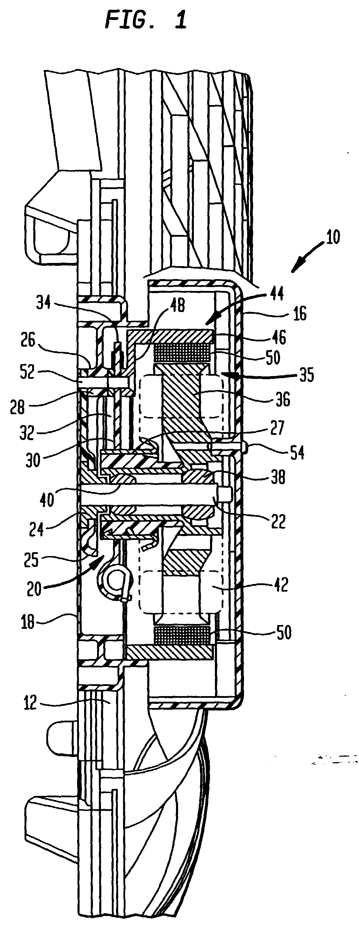

Referring to FIG. 1, an engine cooling module is shown, generally indicated 10, provided in accordance with the principles of the present invention. The cooling module 10 includes a shroud structure 12 formed preferably of lightweight material such as plastic. In the conventional manner, the shroud structure 12 is spaced from and generally adjacent to blades of a fan 16 of the module 10. The shroud structure 12 also has a mounting base 18.

The module 10 includes a dc electric motor, generally indicated at 20, coupled to the mounting base 18 of the shroud structure 12. In particular, the motor 20 has stationary shaft structure having shaft 22 a coupled to a hub 24 at one end thereof. The hub 24 is coupled to a shaft support 25 of the shaft structure which is coupled to a mounting post 26 of the mounting base 18 at end 28. The motor 20 includes a brush card assembly comprising a brush card 30 and brushes 32. The brushes 32 are positioned to contact a commutator 27. The brush card 30 is coupled to the mounting post 26 near end 34 of the brush card 30.

The motor 20 includes a core assembly, generally indicated at 35, supported by bearings 38 and 40 so as to rotate about shaft 22. The core assembly 35 includes a steel core member 36 which may be solid member or may be comprised of a plurality of laminations in the conventional manner. The core assembly 35 includes a winding set 42 wound about the core member 36. The core member 36 carries the commutator 27 for rotation therewith. DC current is fed into the winding set 42 through the brushes 32 riding on the commutator 27.

The motor 20 further includes a flux ring assembly, generally indicated at 44. The flux ring assembly includes a flux ring 46 fixed to the mounting post 26 of the shroud structure 12 near end 48, and permanent magnets 50 fixed to the flux ring 46 and associated with the core member 36 in the conventional manner. Thus, the shaft support 25, the brush card 30 and the flux ring 46 are secured to the mounting post 26 via a fastener such as a screw 52 so that the shroud structure 12 covers an end of the motor 20.

The fan 16 is coupled to the core member 36 via fasteners 54 so as to rotate therewith. The motor 20 operates as a typical brush-type dc motor causing rotation of the core member 36 and thus rotation of the fan 16.

As can be appreciated from FIG. 1, the flux ring 46 advantageously replaces the conventional motor casing and thus reduces motor weight. Further, since certain motor components are coupled directly to the shroud structure 12, advantageously, a conventional end cap is not required at one end of the motor 20.

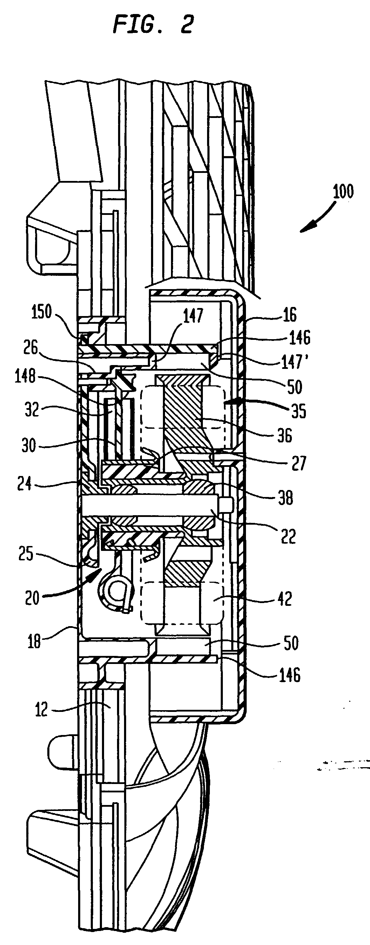

With reference to FIG. 2, a second embodiment of an engine cooling module is shown, generally indicated at 100. Like parts of the embodiments of FIGS. 1 and 2 are given like numerals. Thus, only the differences between the embodiments of FIGS. 1 and 2 are discussed below. The flux ring 146 and magnets 50 are insert molded so as to be fixed with respect to base 18 of the shroud 12. As shown, plastic material 147 and 147' is molded about the magnets 50 and flux ring 146 to fix the magnets and flux ring to the shroud 12. The plastic material 147 and 147' may be considered to be part of the base 18 of the shroud. The magnets are held on opposing sides by the plastic material 147 and 147'. The insert molded flux ring 146 and magnets 50 eliminate the magnet-case subassembly and motor-shroud final assembly of the conventional cooling module. In addition the shaft support 25 is located in a notch 150 of the shroud 12 and is over-molded with molding material so as to be coupled to the base 12 of the shroud 12. The brush card 30 is secured to the mounting post 26 via a conventional clip-lug connection 148 and the commutator 27 and core member 36 are assembled to the shaft 22.

In the conventional manner, the cooling modules 10 and 100 of the invention can be mounted as a unit to be operatively associated with a radiator of a vehicle for cooling the engine of the vehicle. The cooling module of the invention is of reduced axial length as compared to conventional cooling modules. Advantageously, the reduced axial length cooling module of the invention does not consume as much valuable engine compartment space as does conventional cooling modules.

The foregoing preferred embodiments have been shown and described for the purposes of illustrating the structural and functional principles of the present invention, as well as illustrating the methods of employing the preferred embodiments and are subject to change without departing from such principles. Therefore, this invention includes all modifications encompassed within the spirit of the following claims.

## Claims

**1.** An engine cooling module comprising:
a shroud structure having a base,
an electric motor having brushes and being constructed and arranged to produce rotary motion, said motor having components coupled directly to said base so that said shroud structure defines a cover covering an end of said motor; and
a fan having blades and being coupled to said motor so as to be rotated thereby.

**2.** The engine cooling module according to claim 1, wherein said motor components include:
a shaft structure, a brush card carrying said brushes, and a flux ring carrying permanent magnets,
said motor further comprising:
a core assembly mounted for rotation about a portion of said shaft structure, and
a commutator operatively associated with said core assembly
and said brushes.

**3.** The engine cooling module according to claim 2, wherein said core assembly comprises a steel core member and a winding set around said core member.

**4.** The engine cooling module according to claim 2, wherein said base includes a mounting post, and wherein a shaft support of said shaft structure, said brush card, and said flux ring are mounted to said post by a fastener.

**5.** The engine cooling module according to claim 4, wherein said fastener is a screw.

**6.** The engine cooling module according to claim 2, wherein said base includes a mounting post, said brush card being mounted to said post by a fastener.

**7.** The engine cooling module according to claim 6, wherein said fastener is a clip-lug connection.

**8.** The engine cooling module according to claim 2, wherein said shaft structure includes a shaft fixed to a shaft support, said shaft support, said flux ring and said magnets being molded with respected to said base so as to be fixed with respect thereto.

**10.** An engine cooling module comprising:
a shroud structure having a base,
an electric motor for producing rotary motion, said motor comprising:
a shaft structure having a shaft coupled to a shaft support,
a brush card assembly having a brush card and brushes,
a flux ring assembly having a flux ring and magnets coupled to said flux ring, said shaft support, said brush card, and said flux ring being fixed to said base so that said shroud structure defines a cover for one end of said motor,
a core assembly mounted for rotation about said shaft, and
a commutator operatively associated with said core assembly
and said brushes, and
a fan coupled to said core assembly so as to be rotated thereby.

**11.** The engine cooling module according to claim 10, wherein said base includes a mounting post, and wherein a shaft support of said shaft structure, said brush card, and said flux ring are mounted to said post by a fastener.

**12.** The engine cooling module according to claim 10, wherein said base includes a mounting post, said brush card being mounted to said post by a fastener.

**13.** The engine cooling module according to claim 12, wherein said fastener is a clip-lug connection.

**14.** The engine cooling module according to claim 10, wherein a shaft support of said shaft structure, said flux ring and said magnets are molded with respected to said base so as to be fixed with respect thereto.

**15**. A method of assembling an engine cooling module includes:
providing a shroud structure having a base,
providing a motor having:
a shaft support and a shaft coupled thereto,
a brush card assembly having a brush card and brushes,
a flux ring assembly having a flux ring and magnets coupled to said flux ring,
a core assembly mounted for rotation about said shaft, and
a commutator operatively associated with said core assembly and said brushes,
fixedly coupling said shaft support, said brush card, and said flux ring to said base so that said shroud structure defines a cover for one end of said motor,
mounting said commutator and said core assembly on said shaft for rotation thereabout with said magnets being associated with said core assembly; and
coupling a fan to said core assembly for rotation therewith.

**16.** The method according to claim 15, wherein said brush card, said shaft support and said flux ring are coupled to said base via a fastener.

**17.** The method according to claim 15, wherein said shaft support, said flux ring and said magnets are coupled to said base by a molding process and said brush card is coupled to said base via a fastener.

**18.** The method according to claim 17, wherein said fastener is a clip-lug connection.
